# EUROPÄISCHE PATENTSCHRIFT

(11) **EP 3 083 869 B1**
(45) Veröffentlichungstag und Bekanntmachung des Hinweises auf die Patenterteilung: **27.11.2019**
(21) Anmeldenummer: 14828437.5
(22) Anmeldetag: 09.12.2014
(51) Int. Cl.: C09K 3/14, B01J 2/22, C04B 35/111, C04B 35/528, C04B 35/565, C04B 35/583, C04B 35/5831, C04B 35/64, B01J 2/26, C04B 35/52

(54) **VERFAHREN ZUR HERSTELLUNG VON SCHLEIFKÖRPERN**
METHOD FOR THE PRODUCTION OF ABRASIVE ARTICLES
PROCÉDÉ DE PRODUCTION DE CORPS ABRASIFS

(30) Priorität: 18.12.2013 AT 9702013
(43) Veröffentlichungstag der Anmeldung: 26.10.2016
(73) Patentinhaber: Tyrolit - Schleifmittelwerke Swarovski K.G., 6130 Schwaz (AT)
(72) Erfinder: SIGWART, Klaus, A-6230 Brixlegg (AT); HIRSCHMANN, Martin, A-6122 Fritzens (AT)
(74) Vertreter: Torggler & Hofinger Patentanwälte
(86) Internationale Anmeldenummer: PCT/AT2014/000219
(87) Internationale Veröffentlichungsnummer: WO 2015/089529

(56) Entgegenhaltungen:
- US-A- 3 183 071
- US-A1- 2009 120 009
- US-A1- 2013 199 105
- US-A1- 2013 212 952
- US-A1- 2013 236 725

## Beschreibung

Die Erfindung betrifft ein Verfahren zur Herstellung von Schleifkörpern.

Haupteinsatzgebiet der Schleifkörper, die Schleifmittel wie z.B. Korund, Siliziumkarbid, CBN (kubisch kristallines Bornitrid), Diamant oder Mischungen davon umfassen, sind Schleifwerkzeuge zum Trennen und Schleifen. Dabei können die Schleifkörper beispielsweise in eine als Vollschleifkörper ausgebildete Schleifscheibe, in einen auf einem Trägerkörper aufgebrachten Schleifbelag oder in ein Schleifpapier eingearbeitet sein, und zwar - im Falle von keramischen Schleifkörpern - mittels einer keramischen Bindung oder eine Kunstharzbindung. Im Vergleich zu Schleifwerkzeugen, bei denen die Schleifmittel direkt in den Schleifbelag eingearbeitet sind, weisen Schleifwerkzeuge, bei denen die Schleifmittel indirekt über die Schleifkörper zum Tragen kommen, eine höhere Schleifleistung auf.

Es gibt bereits unterschiedliche Verfahren zur Herstellung von Schleifkörpern. Beispielsweise ist in der WO 2012/061033 A2 ein Verfahren offenbart, bei welchem eine kontinuierlich bereitgestellte keramische Schicht mittels Laserstrahlung in einzelne Schleifkörper zerschnitten wird. Der Einsatz eines Lasers erfordert einen hohen technischen Aufwand und ist relativ kostspielig. Außerdem erfolgt die Herstellung von Schleifkörpern üblicherweise nicht unter Reinraumbedingungen, sondern eher in staubigen Umgebungen, was dem Einsatz eines Lasers mit entsprechenden Optiken nicht zuträglich ist. Und schließlich hat es sich herausgestellt, dass die Präzision und Einheitlichkeit der Form der Schleifkörper, die mittels eines Lasers erzielbar sind, im Hinblick auf die Schleifleistung eine untergeordnete Rolle spielen.

Ein weiteres Verfahren zur Herstellung von Schleifkörpern wird in der US 2013/0199105 A1 beschrieben. Dabei wird ein Ausgangsgemisch auf einen Träger in Form einer Schicht aufgebracht, wobei diese Schicht eine plattenförmige Geometrie haben kann. Anschließend wird die Schicht mit Sollbruchkanten versehen.

Die technische Aufgabe besteht darin, ein im Vergleich zum Stand der Technik kostengünstiges und technisch einfach durchzuführendes Verfahren zur Herstellung von Schleifkörpern anzugeben.

Diese Aufgabe wird gelöst, durch die zeitlich aufeinanderfolgenden Verfahrensschritte
i. Bereitstellen eines Ausgangsgemischs aus zumindest einem Schleifmittel, einem keramischen oder organischen Bindungsmittel und einem Plastifizierungsmittel,
ii. Erzeugen einer Schicht aus dem Ausgangsgemisch mit einer vorbestimmten, einheitlichen Schichtdicke, und
iii. Unterteilen der Schicht des Ausgangsgemischs in voneinander getrennte plattenförmige Körper, und
iv. Sintern der plattenförmigen Körper und Brechen der gesinterten plattenförmigen Körper zu Schleifkörpern.

Der erste Verfahrensschritt, das Bereitstellen eines Ausgangsgemischs, erfolgt vorzugsweise dadurch, dass die Bestandteile des Ausgangsgemischs in einem vorbestimmten Mengenverhältnis vermischt werden. Als Schleifmittel kommen bevorzugt Korund, Siliziumkarbid, Bornitrid und/oder Diamanten zum Einsatz.

Mittels des zweiten Grundbestandteils des Ausgangsgemischs, des keramischen oder organischen Bindungsmittels, wird im Zuge des Sinterungsprozesses eine Bindung für das Schleifmittel bereitgestellt. Das Bindungsmittel wird dem Ausgangsgemisch bevorzugt in Pulverform zugesetzt. Als keramische Bindungsmittel bieten sich grundsätzlich alle sinterbaren keramischen Substanzen an, die aus dem Stand der Technik bekannt sind. Als organisches Bindungsmittel kommt z.B. Phenolharz oder Epoxidharz in Betracht.

Der dritte Grundbestandteil des Ausgangsgemischs, das Plastifizierungsmittel, wird zugesetzt, damit das Ausgangsgemisch für die Weiterbearbeitung nicht zu spröde ist. Auch in diesem Fall bieten sich eine Reihe unterschiedlicher allgemein bekannter Plastifizierungsmittel an. Grundsätzlich unterscheidet man zwischen nicht-wässrigen und wässrigen Plastifizierungsmitteln. Über die Auswahl lässt sich im Einzelfall die Flexibilität des Ausgangsgemischs an die jeweiligen Erfordernisse anpassen. Zusätzlich zu den Grundbestandteilen können dem Ausgangsgemisch noch weitere Komponenten zugesetzt werden, wie z.B. Binder, Verflüssiger, Benetzungsmittel, Lösungsmittel oder Sinteradditive.

Der zweite Verfahrensschritt, das Erzeugen einer Schicht aus dem Ausgangsgemisch, erfolgt in vorteilhafter Weise dadurch, dass die Parameter des Ausgangsgemischs so angepasst werden, dass das Ausgangsgemisch gussfähig ist und die Schicht aus dem Ausgangsgemisch im Wesentlichen durch Gießen erzeugt wird.

Bringt man die Schicht z.B. auf einem Träger, vorzugsweise einem Endlosträgerband, auf, so lässt sich die Schichtdicke in einfacher Weise über einen Spalt mit einer vorbestimmten Höhe einstellen. Durch die Höhe dieser Schicht lässt sich die Höhe der am Ende des Herstellungsverfahrens vorliegenden Schleifkörper einstellen, wobei die Höhe im Zuge des Sinterungsprozesses - im Wesentlichen bedingt durch die Reduktion des Flüssigkeitsanteils - um bis zu 50%, durchschnittlich zwischen 5% und 20%, abnimmt.. Als günstig hat sich im Hinblick auf die Schleifleistung eine Höhe der Schleifkörper von maximal 5,0 mm, vorzugsweise von 0,2 mm bis 1,0 mm, erwiesen.

Beim dritten Verfahrensschritt wird die Schicht des Ausgangsgemischs in voneinander getrennte plattenförmige Körper unterteilt.

Das Brechen der gesinterten plattenförmigen Körper zu Schleifkörpern im Zuge des vierten Verfahrensschritts erfolgt vorteilhafter Weise in einer Brechvorrichtung.

Es hat sich im Hinblick auf das Brechen des plattenförmigen Körpers zu Schleifkörpern als günstig herausgestellt, dass die Schicht in einem weiteren Verfahrensschritt mit Sollbruchkanten versehen wird. Hierfür bieten sich grundsätzlich mehrere Möglichkeiten an: Beispielsweise kann zur Erzeugung der Sollbruchkanten eine netz- oder gitterförmige Struktur, vorzugsweise aus Kunststoff, in die Schicht eingelagert werden, wobei die netz- oder gitterförmige Struktur während des Sinterns, d.h. bei Temperaturen von 800°C und 1400°C, verbrennt - jedoch bei niedrigeren Temperaturen, die z.B. bei einem etwaigen Vortrocknungsprozess vorliegen, hitzebeständig ist. Eine weitere Möglichkeit zur Erzeugung der Sollbruchkanten besteht darin, dass diese auf die Schicht des Ausgangsgemischs, vorzugsweise mittels einer Walze, aufgeprägt werden.

Während des Brechens oder nach dem Brechen des plattenförmigen Körpers kann eine Größenauswahl der Schleifkörper durch Sieben erfolgen: Sind die Schleifkörper klein genug, so werden sie über ein Sieb ausgeschieden.

Im Hinblick auf eine besonders gute Schleifleistung haben sich Schleifkörper mit einer im Wesentlichen dreieckigen Grundfläche als vorteilhaft erwiesen, wobei die kürzeste Seite der dreieckigen Grundfläche zwischen 0,2 mm und 10,0 mm lang ist.

Weitere vorteilhafte Ausführungsformen des gegenständlichen Verfahrens zur Herstellung von Schleifkörpern sind dadurch gekennzeichnet, dass die Schicht aus dem Ausgangsgemisch nach ihrer Erzeugung vorgetrocknet und/oder zur Zwischenspeicherung aufgewickelt oder in Segmente, die in weiterer Folge aufgestapelt werden, unterteilt wird.

Weitere Vorteile und Einzelheiten der Erfindung ergeben sich anhand der Figuren und der dazugehörigen Figurenbeschreibung. Dabei zeigen:
- Fig. 1a: ein nicht-erfindungsgemäßes Verfahren zur Herstellung von Schleifkörpern in Form eines Flussdiagramms,
- Fig. 1b: eine Ausführungsart des erfindungsgemäßen Verfahrens in Form eines Flussdiagramms,
- Fig. 2a und 2b: Schemazeichnungen zur möglichen technischen Umsetzung der in den Fig. 1a und 1b veranschaulichten Verfahren, und
- Fig. 3: in einer schematischen Darstellung eine vorteilhafte Form der hergestellten Schleifkörper.

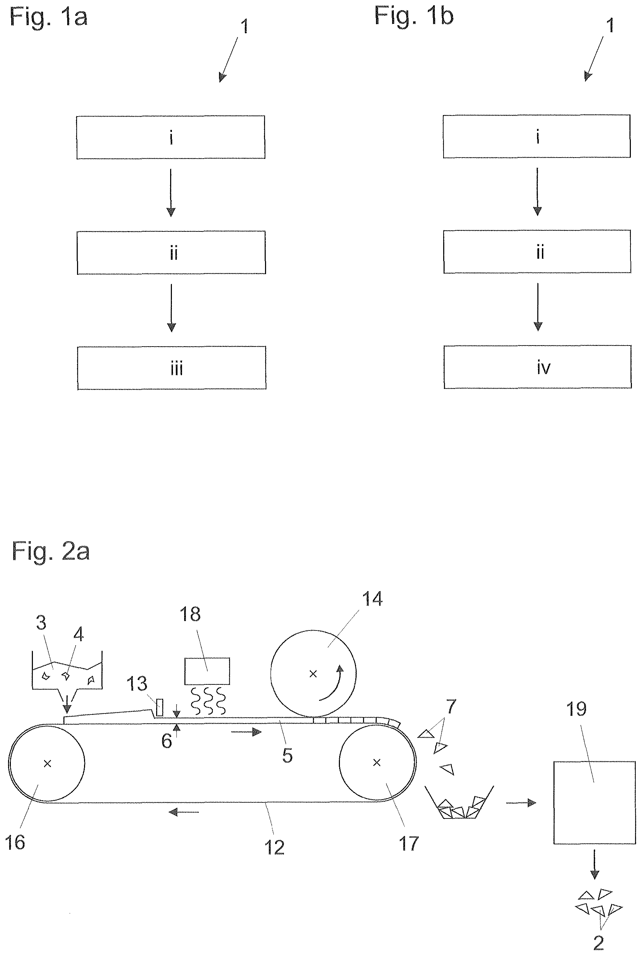

Bei dem in der Figur 1a anhand eines Flussdiagramms dargestellten nicht-erfindungsgemäßen Verfahren 1 zur Herstellung von Schleifkörpern wird in einem ersten Verfahrensschritt i zunächst ein Ausgangsgemisch aus zumindest einem Schleifmittel, einem keramischen oder organischen Bindungsmittel und einem Plastifizierungsmittel bereitgestellt. Anschließend wird im Zuge eines zweiten Verfahrensschritts ii eine Schicht aus dem Ausgangsgemisch mit einer vorbestimmten, einheitlichen Schichtdicke erzeugt. Bei dem dritten, zeitlich darauffolgenden Verfahrensschritt iii werden die Schicht des Ausgangsgemischs in geformte Materialabschnitte unterteilt und die geformten Materialabschnitte schließlich zu Schleifkörpern gesintert.

Bei der erfindungsgemäßen Ausführungsform des Verfahrens (vergleiche Fig. 1b) werden die Verfahrensschritte i und ii in gleicher Weise durchgeführt. Anschließend wird die Schicht des Ausgangsgemischs in voneinander getrennte plattenförmige Körper unterteilt (in der Figur nicht als eigener Verfahrensschritt dargestellt) und schließlich werden - im Verfahrensschritt, der im Flussdiagramm mit iv bezeichnet ist - die plattenförmigen Körper gesintert und die gesinterten plattenförmigen Körper anschließend in einzelne Schleifkörper zerbrochen.

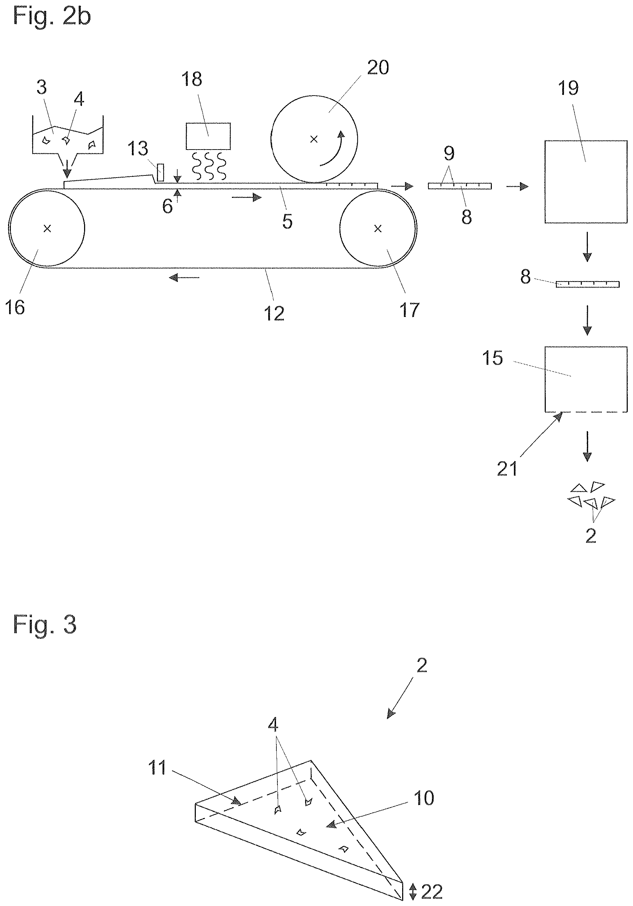

Eine beispielhafte technische Umsetzung der Verfahren gemäß den Figuren 1a und 1b ist in den Figuren 2a und 2b schematisch dargestellt: In beiden Fällen wird zunächst ein Ausgangsgemisch 3 in einem bestimmten Zusammensetzungsverhältnis bereitgestellt. Die in diesem Ausgangsgemisch 3 vorhandenen Schleifmittel in Form von Diamant, Korund, Siliziumkarbid und/oder Bornitrid sind mit dem Bezugszeichen 4 versehen. Es handelt sich jeweils um ein gussfähiges Ausgangsgemisch.

Zum Erzeugen einer Schicht 5 aus dem Ausgangsgemisch 3 wird das Ausgangsgemisch 3 auf einen Träger 12 in Form eines Endlosträgerbands, das über die Wälzkörper 16 und 17 geführt wird, gegossen. Das Ausgangsgemisch 3 wird in weiterer Folge über die Bewegung des Endlosträgerbands 12 durch eine Spaltvorrichtung 13 mit einer vorbestimmten Spalthöhe transportiert. Auf diese Weise erhält die Schicht 5 aus dem Ausgangsgemisch 3 eine vorbestimmte, einheitliche Schichtdicke 6. Nach ihrer Erzeugung wird die Schicht 5 aus dem Ausgangsgemisch 3 mittels einer Heizvorrichtung 18 bei einer Temperatur zwischen 50°C und 500°C vorgetrocknet. Bis zu diesem Zeitpunkt laufen die in den Fig. 2a und 2b dargestellten Verfahren gleich ab.

Im Falle des in der Fig. 2a dargestellten nicht-erfindungsgemäßen Herstellungsverfahrens wird die Schicht 5 des Ausgangsgemischs 3 nach dem Vortrocknen durch Prägen oder Stanzen mittels einer Walze 14 in geformte Materialabschnitte 7 unterteilt. Diese werden anschließend einem an sich bekannten Sinterungsprozess zugeführt, der bei einer Temperatur zwischen 800°C und 1400°C durchgeführt wird. Damit ist das Herstellungsverfahren der Schleifkörper 2 abgeschlossen.

Im Falle des in der Fig. 2b dargestellten erfindungsgemäßen Herstellungsverfahrens in einer bevorzugten Ausführungsform werden nach dem Vortrocknen der Schicht 5 des Ausgangsgemischs 3 mittels einer Walze 20 Sollbruchkanten 9 auf die Schicht 5 des Ausgangsgemischs 3 aufgeprägt. Anschließend wird die Schicht 5 des Ausgangsgemischs 3 in plattenförmige Körper 8 unterteilt, die in weiterer Folge in einem entsprechenden Ofen 19 gesintert werden. Die plattenförmigen Körper 8 werden anschließend einer Brechvorrichtung 15 zugeführt und in dieser zerbrochen. Bruchstücke, die eine vorbestimmte Größe unterschreiten, werden mithilfe einer Siebvorrichtung 21 selektiert. Damit ist auch in diesem Fall das Herstellungsverfahren der Schleifkörper 2 abgeschlossen.

Und schließlich ist in der Fig. 3 schematisch eine vorteilhafte Ausführungsform der hergestellten Schleifkörper 2 dargestellt. Die Schleifkörper 2 weisen bei dieser Ausführungsform eine im Wesentlichen dreieckige Grundfläche 10 auf, wobei die kürzeste Seite 11 der dreieckigen Grundfläche 10 zwischen 0,2 mm und 10,0 mm lang ist. Die Höhe 22 der Schleifkörper 2 beträgt zwischen 0,2 mm und 1,0 mm. Die Schleifkörper 2 bestehen im Wesentlichen aus einer Keramikbindung und darin eingebetteten Schleifmitteln 4 in Form von Diamant, Korund, Siliziumkarbid und/oder Bornitrid.

## Patentansprüche

1. Verfahren (1) zur Herstellung von Schleifkörpern (2), **gekennzeichnet durch** die zeitlich aufeinanderfolgenden Verfahrensschritte:
i. Bereitstellen eines Ausgangsgemischs (3) aus zumindest einem Schleifmittel (4), einem keramischen oder organischen Bindungsmittel und einem Plastifizierungsmittel,
ii. Erzeugen einer Schicht (5) aus dem Ausgangsgemisch (3) mit einer vorbestimmten, einheitlichen Schichtdicke (6), und
iii. Unterteilen der Schicht (5) des Ausgangsgemischs (3) in voneinander getrennte plattenförmige Körper (8), und
iv. Sintern der plattenförmigen Körper (8) und Brechen der gesinterten plattenförmigen Körper (8) zu Schleifkörpern (2).

2. Verfahren (1) nach Anspruch 1, **dadurch gekennzeichnet, dass** ein gussfähiges Ausgangsgemisch (3) bereitgestellt wird und das Erzeugen der Schicht (5) aus dem Ausgangsgemisch (3) im Wesentlichen durch Gießen erfolgt.

3. Verfahren (1) nach Anspruch 1 oder 2, **dadurch gekennzeichnet, dass** Schleifkörper (2) hergestellt werden, die eine Höhe (22) von maximal 5,0 mm, vorzugsweise von 0,2 mm bis 1,0 mm, aufweisen.

4. Verfahren (1) nach einem der Ansprüche 1 bis 3, **dadurch gekennzeichnet, dass** die Schicht (5) vor dem Verfahrensschritt iii in einem weiteren Verfahrensschritt mit Sollbruchkanten (9) versehen wird.

5. Verfahren (1) nach Anspruch 4, **dadurch gekennzeichnet, dass** zur Erzeugung der Sollbruchkanten eine netz- oder gitterförmige Struktur, vorzugsweise aus Kunststoff, in die Schicht (5) eingelagert wird, wobei die netz- oder gitterförmige Struktur während des Sinterns verbrennt.

6. Verfahren (1) nach Anspruch 4, **dadurch gekennzeichnet, dass** die Sollbruchkanten (9) auf die Schicht (5) des Ausgangsgemischs (3), vorzugsweise mittels einer Walze (20), aufgeprägt werden.

7. Verfahren (1) nach einem der Ansprüche 1 bis 6, **dadurch gekennzeichnet, dass** während des oder nach dem Brechen des plattenförmigen Körpers (8) eine Größenauswahl der Schleifköper (2) durch Sieben erfolgt.

8. Verfahren (1) nach einem der Ansprüche 1 bis 7, **dadurch gekennzeichnet, dass** Schleifkörper (2) hergestellt werden, die eine im Wesentliche dreieckigen Grundfläche (10) aufweisen, wobei die kürzeste Seite (11) der dreieckigen Grundfläche (10) zwischen 0,2 mm und 10,0 mm lang ist.

9. Verfahren (1) nach einem der Ansprüche 1 bis 8, **dadurch gekennzeichnet, dass** die Schicht (5) aus dem Ausgangsgemisch (3) nach ihrer Erzeugung, also nach dem Verfahrensschritt ii, vorgetrocknet und/oder zur Zwischenspeicherung aufgewickelt oder in Segmente, die aufgestapelt werden, unterteilt wird.

10. Verfahren (1) nach einem der Ansprüche 1 bis 9, **dadurch gekennzeichnet, dass** als Schleifmittel (4) Diamant, Korund, Siliziumkarbid und/oder Bornitrid zum Einsatz kommen.

11. Verfahren (1) nach einem der Ansprüche 1 bis 10, **dadurch gekennzeichnet, dass** die Schicht (5) aus dem Ausgangsgemisch (3) auf einem Träger (12), vorzugsweise einem Endlosträgerband, erzeugt wird.

12. Verfahren (1) nach einem der Ansprüche 1 bis 11, **dadurch gekennzeichnet, dass** die Schichtdicke (6) der aus dem Ausgangsgemisch (3) erzeugten Schicht (5) über einen Spalt (13) mit einer vorbestimmten Höhe eingestellt wird.

13. Verfahren (1) nach einem der Ansprüche 1 bis 12, **dadurch gekennzeichnet, dass** das Brechen des plattenförmigen Körpers (8) in einer Brechvorrichtung (15) erfolgt.

## Claims

1. A method (1) of producing abrasive bodies (2) **characterised by** the successively effected method steps:
i. providing a starting mixture (3) comprising at least one abrasive agent (4), a ceramic or organic binding agent and a plasticising agent,
ii. producing a layer (5) from the starting mixture (3) with a predetermined uniform layer thickness (6),
iii. dividing the layer (5) of the starting mixture (3) into mutually separated plate-shaped bodies (8), and
iv. sintering the plate-shaped bodies (8) and breaking the sintered plate-shaped bodies (8) to give abrasive bodies (2).

2. The method (1) according to claim 1 **characterised in that** a castable starting mixture (3) is provided and the production of the layer (5) from the starting mixture (3) is effected substantially by casting.

3. The method (1) according to claim 1 or claim 2 **characterised in that** abrasive bodies (2) are produced which are at the maximum 5.0 mm, preferably from 0.2 mm to 1.0 mm in height (22)

4. The method (1) according to one of the claims 1 to 3 **characterised in that** prior to method step iii the layer (5) is provided with predetermined breaking edges (9) in a further method step.

5. The method (1) according to claim 4 **characterised in that** in order to produce the predetermined breaking edges a net- or lattice-shaped structure, preferably of plastic, is embedded in the layer (5), wherein the net- or lattice-shaped structure burns during the sintering.

6. The method (1) according to claim 4 **characterised in that** the predetermined breaking edges (9) are stamped on the layer (5) of the starting mixture (3), preferably by means of a roller (20).

7. The method (1) according to one of the claims 1 to 6 **characterised in that** during or after breaking the plate-shaped body (8) a size selection of the abrasive bodies (2) is effected by sieving.

8. The method (1) according to one of the claims 1 to 7 **characterised in that** abrasive bodies (2) are produced which have a substantially triangular base (10), wherein the shortest side (11) of the triangular base (10) is between 0.2 mm and 10.00 mm in length.

9. The method (1) according to one of the claims 1 to 8 **characterised in that** the layer (5) comprising the starting mixture (3) after the production thereof, that is to say after method step ii, is pre-dried and/or wound up for intermediate storage or divided into segments which are stacked up.

10. The method (1) according to one of the claims 1 to 9 **characterised in that** diamond, corundum, silicon carbide and /or boron nitride are used as abrasive agent (4).

11. The method (1) according to one of the claims 1 to 10 **characterised in that** the layer (5) is produced from the starting mixture (3) on a carrier (12), preferably an endless carrier belt.

12. The method (1) according to one of the claims 1 to 11 **characterised in that** the layer thickness (6) of the layer (5) produced from the starting mixture (3) is adjusted by way of a gap (13) of a predetermined height.

13. The method (1) according to one of the claims 1 to 12 **characterised in that** breaking the plate-shaped body (8) is effected in a breaking apparatus (15).

## Revendications

1. Procédé (1) servant à fabriquer des corps abrasifs (2), **caractérisé par** les étapes de procédé se suivant les unes les autres :
i. de fourniture d'un mélange de départ (3) composé d'au moins un produit abrasif (4), d'un liant céramique ou organique et d'un plastifiant,
ii. de production d'une couche (5) à partir du mélange de départ (3) avec une épaisseur de couche (6) uniforme prédéfinie, et
iii. de division de la couche (5) du mélange de départ (3) en corps (8) en forme de plaque séparés les uns les autres, et
iv. de frittage des corps (8) en forme de plaque et de rupture des corps (8) en forme plaque frittés en des corps abrasifs (2).

2. Procédé (1) selon la revendication 1, **caractérisé en ce qu'**un mélange de départ (3) pouvant être coulé est fourni et la production de la couche (5) est effectuée sensiblement par coulée à partir du mélange de départ (3).

3. Procédé (1) selon la revendication 1 ou 2, **caractérisé en ce que** des corps abrasifs (2) sont fabriqués, qui présentent une hauteur (22) de 5,0 mm au maximum, de préférence de 0,2 mm à 1,0 mm.

4. Procédé (1) selon l'une quelconque des revendications 1 à 3, **caractérisé en ce que** la couche (5) est pourvue avant l'étape de procédé iii lors d'une autre étape de procédé d'arêtes de rupture théorique (9).

5. Procédé (1) selon la revendication 4, **caractérisé en ce que** pour produire les arêtes de rupture théorique, une structure en forme de filet ou de grille, de préférence composée de matière plastique, est incorporée dans la couche (5), dans lequel la structure en forme de filet ou de grille est brûlée pendant le frittage.

6. Procédé (1) selon la revendication 4, **caractérisé en ce que** les arêtes de rupture théorique (9) sont estampées sur la couche (5) du mélange de départ (3), de préférence au moyen d'un cylindre (20).

7. Procédé (1) selon l'une quelconque des revendications 1 à 6, **caractérisé en ce que** pendant ou après la rupture du corps (8) en forme de plaque, un tri de taille des corps abrasifs (2) est effectué par criblage.

8. Procédé (1) selon l'une quelconque des revendications 1 à 7, **caractérisé en ce que** des corps abrasifs (2) sont fabriqués, qui présentent une surface de base (10) sensiblement triangulaire, dans lequel le côté (11) le plus court de la surface de base (10) triangulaire présente une longueur entre 0,2 mm et 10,0 mm.

9. Procédé (1) selon l'une quelconque des revendications 1 à 8, **caractérisé en ce que** la couche (5) composée du mélange de départ (3) est séchée au préalable après sa production, donc après l'étape de procédé ii, et/ou est enroulée aux fins du stockage temporaire ou est divisée en segments, qui sont empilés.

10. Procédé (1) selon l'une quelconque des revendications 1 à 9, **caractérisé en ce que** sont utilisés en tant que produits abrasifs (4) le diamant, le corindon, le carbure de silicium et/ou le nitrure de bore.

11. Procédé (1) selon l'une quelconque des revendications 1 à 10, **caractérisé en ce que** la couche (5) est produite à partir du mélange de départ (3) sur un support (12), de préférence une bande de support sans fin.

12. Procédé (1) selon l'une quelconque des revendications 1 à 11, **caractérisé en ce que** l'épaisseur de couche (6) de la couche (5) produite à partir du mélange de départ (3) est réglée par l'intermédiaire d'une fente (13) avec une hauteur prédéfinie.

13. Procédé (1) selon l'une quelconque des revendications 1 à 12, **caractérisé en ce que** la rupture du corps (8) en forme de plaque est effectuée dans un dispositif de rupture (15).
